# EUROPEAN PATENT APPLICATION

(11) **EP 3 182 655 A1**
(43) Date of publication of application: **21.06.2017**
(21) Application number: 14901647.9
(22) Date of filing: 10.09.2014
(51) Int. Cl.: H04L 12/70

(54) **DATA FORWARDING METHOD AND APPARATUS, AND ACCESS DEVICE**

(71) Applicant: Huawei Technologies Co., Ltd., Longgang District Shenzhen, Guangdong 518129 (CN)
(72) Inventor: PU, Yun, Shenzhen Guangdong 518129 (CN)
(74) Representative: Körber, Martin Hans
(86) International application number: PCT/CN2014/086214
(87) International publication number: WO 2016/037326

(57) **Abstract**

The present invention provides a data forwarding method and apparatus, and an access device, so as to resolve a prior-art problem that S+C service data cannot be forwarded because forwarding tables corresponding to an IVL address learning manner and an SVL address learning manner are not applicable to an S+C service. The method is as follows: first, all ports on an access device are grouped into two port groups, and the access device stores a correspondence among a VLAN, a port identifier, and a port group to which a port identified by the port identifier belongs; the access device receives a packet, identifies a port group to which a port that receives the packet belongs as a first port group, and obtains a VLAN from the packet; and the access device obtains a corresponding port identifier from the correspondence by using the obtained VLAN and a second port group, and forwards the packet through a port identified by the obtained port identifier. In this way, when a packet is forwarded, a forwarding table may be quickly queried according to a VLAN and a port group, to determine an egress port identifier. Therefore, forwarding efficiency of the access device is improved.

## Description

### TECHNICAL FIELD

The present invention relates to the communications field, and in particular, to a data forwarding method and apparatus, and an access device.

### BACKGROUND

A switch forwards a received packet according to a destination Media Access Control (Media Access Control, MAC) address of the packet. Therefore, the switch maintains a forwarding database table in which a correspondence between a MAC address and a port is recorded, to instruct the switch to perform forwarding. The forwarding table is referred to as a MAC address forwarding table. The switch records a source MAC address of the received packet and source port information of the received packet in the table for use in subsequent packet forwarding. This recording process is referred to as a MAC address learning process.

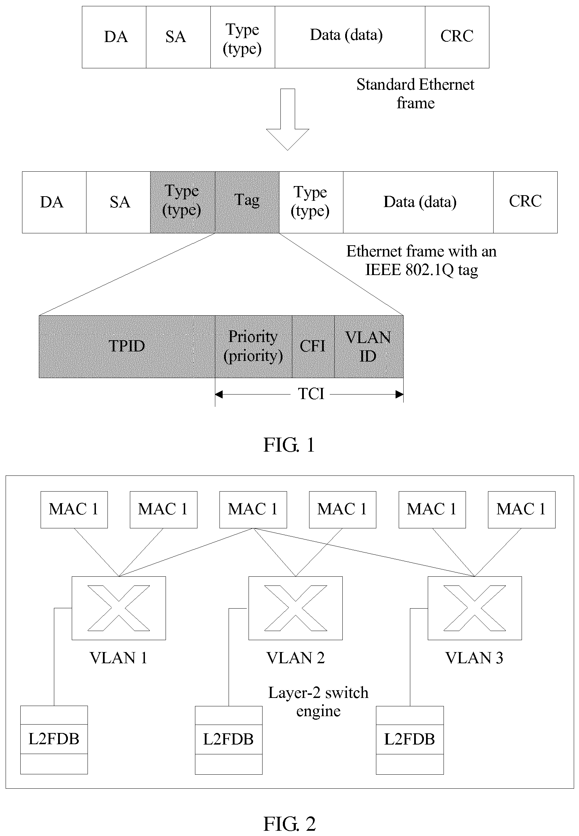

With the development of a virtual local area network (Virtual Local Area Network, VLAN) technology, VLAN information is added to a standard Ethernet frame. Referring to FIG. 1, a tag header added to an Ethernet frame defined in the IEEE 802.1Q standard includes a 2-byte tag protocol identifier (Tag Protocol Identifier, TPID) and 2-byte tag control information (Tag Control Information, TCI).

The TPID indicates that the Ethernet frame is a frame to which an 802.1Q tag is added. The TCI includes control information of the frame, and the control information includes the following elements: a priority, a canonical format indicator (Canonical format indicator, CFI), and a VLAN identifier (VLAN Identifier, VLAN ID). The VLAN ID is a 12-bit field and indicates a VLAN identifier. A data packet sent by each switch supporting the 802.1Q protocol carries a VLAN ID to indicate a VLAN to which the data packet locally belongs. A major difference between a data forwarding procedure of a switch supporting a VLAN and a data forwarding procedure of a common switch lies in that a packet forwarded by the switch supporting a VLAN carries a VLAN tag, that is, in a forwarding process, not only an egress port needs to be found according to a MAC address, but also VLAN ID information needs to be determined. Therefore, a switch engine of the switch supporting a VLAN is different from that of the common switch. Referring to FIG. 2, the switch respectively forwards services according to different VLAN IDs and a layer 2 forwarding table (Layer 2 Forwarding Database, L2FDB).

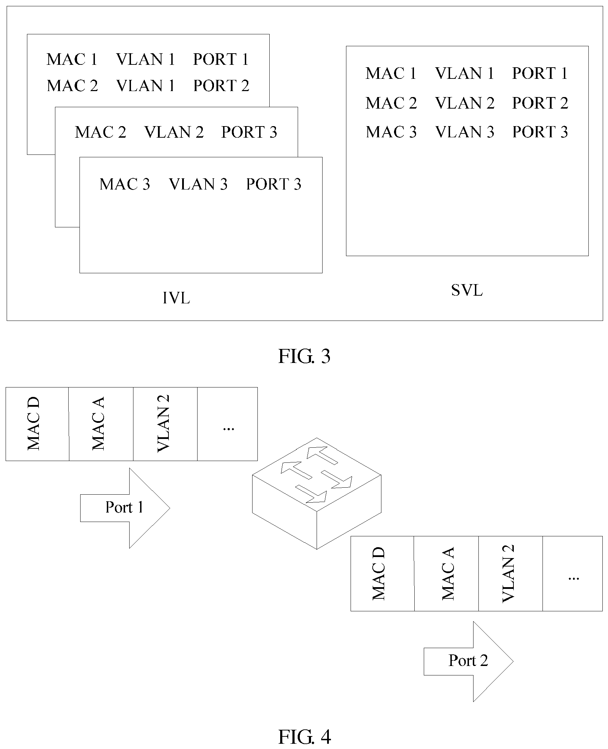

Currently, the switch supporting a VLAN has two address learning manners that are separately independent VLAN learning (Independent VLAN Learning, IVL) and shared VLAN learning (Shared VLAN Learning, SVL). Referring to FIG. 3, in the IVL manner, each VLAN has a corresponding MAC address table, MAC address tables do not affect each other, and one MAC address can be learned to different VLANs, such as MAC 2. Therefore, if a user belongs to multiple VLANs, information in each VLAN needs to be relearned. However, in the SVL manner, an address table is applicable to all VLANs, and therefore, MAC addresses in a table cannot be repeated.

Referring to FIG. 4, a forwarding procedure of the IVL address learning manner is: first, a VLAN ID, that is, VLAN 2, is determined according to a tag header in a received Ethernet frame; then, referring to Table 1, an L2FDB table corresponding to a switch is queried according to the VLAN ID, to determine a searching range, that is, the first entry and the fourth entry; then, an egress port, that is, a port 2, is determined in the determined searching range in the L2FDB table according to a destination address (Destination Address, DA): MAC D. If no entry corresponding to the MAC D is found in the L2FDB table, the Ethernet frame is forwarded through all ports in the VLAN 2 in a broadcasting manner. In addition, a source address (source address, SA), that is, MAC A of the Ethernet frame and a source port, that is, a port 1 (that is, a port that receives the Ethernet frame) are updated to the L2FDB table by using an aging mechanism.

**Table 1 L2FDB table corresponding to an IVL address learning manner**

| **VLAN ID** | **MAC address** | **Port identifier** |
|---|---|---|
| VLAN 2 | MAC A | PORT 1 |
| VLAN 3 | MAC B | PORT 1 |
| VLAN 3 | MAC C | PORT 2 |
| VLAN 2 | MAC D | PORT 2 |

FIG. 4 is still used as an example. A forwarding procedure of the SVL address learning manner is: it is directly determined that a DA of a received Ethernet frame is MAC D, and referring to Table 2, an L2FDB table corresponding to a switch is queried according to the DA, to determine an egress port, that is, a port 2; then, it is determined whether a VLAN ID of the egress port matches a VLAN ID in a tag header of the received Ethernet frame, and if the VLAN ID of the egress port matches the VLAN ID in the tag header of the received Ethernet frame, the Ethernet frame is forwarded, or if the VLAN ID of the egress port does not match the VLAN ID in the tag header of the received Ethernet frame, the Ethernet frame is discarded. If no entry corresponding to the MAC D is found in the L2FDB table, all egress ports whose VLAN IDs match the VLAN ID in the tag header of the Ethernet frame are found in the L2FDB, and the Ethernet frame is broadcast through all the egress ports corresponding to the VLAN ID in the tag header of the Ethernet frame. In addition, an SA, that is, MAC A and a source port, that is, a port 1 of the Ethernet frame are updated to the L2FDB table by using an aging mechanism.

**Table 2 L2FDB table corresponding to an SVL address learning manner**

| **MAC address** | **Port identifier** |
|---|---|
| MAC A | PORT1 |
| MAC B | PORT 1 |
| MAC C | PORT 2 |
| MAC D | PORT 2 |

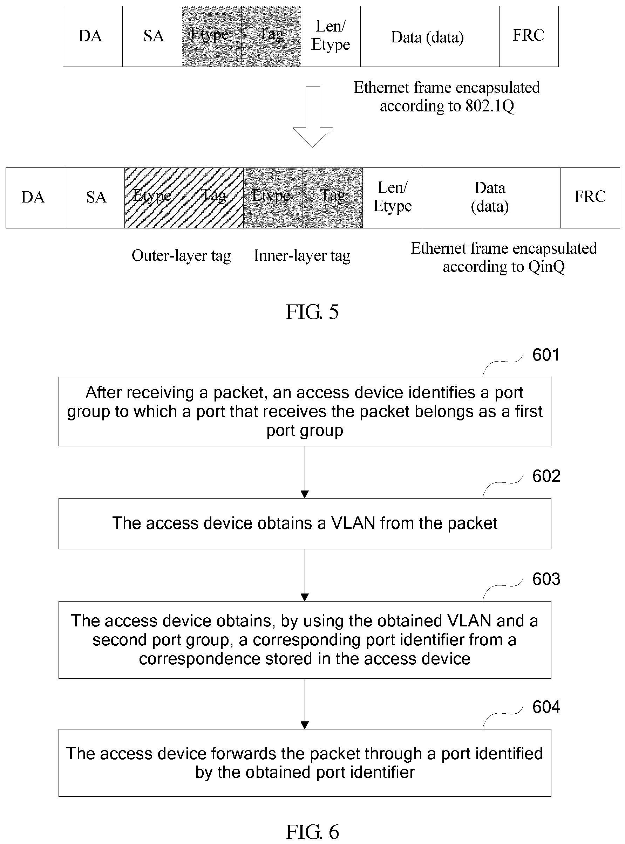

Referring to FIG. 5, based on 802.1Q, a double-layer VLAN QinQ technology appears in the industry. That is, an Ethernet frame has a two-layer VLAN tag. An inner-layer tag and an outer-layer tag have a same Etype that is 0x8100, or an Etype of an inner-layer tag can match an Etype of an outer-layer tag. A service in which data is transmitted by using an Ethernet frame encapsulated according to the QinQ is a VLAN cross connect service, that is, an S+C service. S is a service virtual local area network (Service VLAN, SVLAN), that is, a VLAN of an outer-layer tag of the Ethernet frame. C is a customer virtual local area network (Customer VLAN, CVLAN), that is, a VLAN of an inner-layer tag of the Ethernet frame. The S+C service is a data forwarding service between two ports.

A forwarding table corresponding to a device used for the S+C service needs to be corresponding to two ports. One of the ports is a source port, and the other port is an egress port. Apparently, only one port can be specified in each entry of the L2FDB tables corresponding to the two address learning manners in the prior art. Therefore, neither of the two address learning manners is applicable to the S+C service for forwarding S+C service data.

### SUMMARY

Embodiments of the present invention provide a data forwarding method and apparatus, and an access device, so as to resolve a prior-art problem that S+C service data cannot be forwarded because forwarding tables corresponding to an IVL address learning manner and an SVL address learning manner are not applicable to an S+C service.

According to a first aspect, a data forwarding method is provided, where ports on an access device are grouped into a first port group and a second port group, the access device stores a correspondence among a virtual local area network VLAN, a port identifier, and a port group to which a port identified by the port identifier belongs, and the method includes:
receiving, by the access device, a packet, and identifying a port group to which a port that receives the packet belongs as the first port group;
obtaining, by the access device, a VLAN from the packet;
obtaining, by the access device, a corresponding port identifier from the correspondence by using the obtained VLAN and the second port group; and
forwarding, by the access device, the packet through a port identified by the obtained port identifier.

With reference to the first aspect, in a first possible implementation manner, the VLAN includes a service virtual local area network SVLAN and a customer VLAN, or the VLAN is an SVLAN.

With reference to the first possible implementation manner of the first aspect, in a second possible implementation manner, when the VLAN includes the SVLAN and the customer VLAN, the method further includes:
obtaining, when the access device obtains no corresponding port identifier from the correspondence by using the obtained VLAN and the second port group, at least one corresponding port identifier from the correspondence by using the SVLAN in the obtained VLAN and the second port group.

With reference to any one of the first aspect, or the foregoing possible implementation manners, in a third possible implementation manner, after the identifying, by the access device, a port group to which a port that receives the packet belongs as the first port group and the obtaining a VLAN from the packet, the method further includes:
updating, by the access device, the correspondence according to the VLAN, a port identifier corresponding to the port that receives the packet, and the first port group.

With reference to the third possible implementation manner of the first aspect, in a fourth possible implementation manner, the updating the correspondence according to the VLAN, a port identifier corresponding to the port that receives the packet, and the first port group includes:
determining whether the correspondence includes a correspondence between the VLAN and the first port group; and
if the correspondence includes the correspondence between the VLAN and the first port group, updating, based on the port identifier corresponding to the port that receives the packet, a port identifier included in the correspondence between the VLAN and the first port group; or if the correspondence does not include the correspondence between the VLAN and the first port group, creating a new correspondence and adding the new correspondence to the correspondence, where the new correspondence includes the VLAN, the first port group, and the port identifier corresponding to the port that receives the packet.

According to a second aspect, a data forwarding apparatus is provided, where ports on the data forwarding apparatus are grouped into a first port group and a second port group, the data forwarding apparatus stores a correspondence among a virtual local area network VLAN, a port identifier, and a port group to which a port identified by the port identifier belongs, and the apparatus includes:
a receiving unit, configured to: receive a packet, and identify a port group to which a port that receives the packet belongs as the first port group;
an obtaining unit, configured to obtain a VLAN from the packet; and
a processing unit, configured to: obtain a corresponding port identifier from the correspondence by using the obtained VLAN and the second port group, and forward the packet through a port identified by the obtained port identifier.

With reference to the second aspect, in a first possible implementation manner, the VLAN includes a service virtual local area network SVLAN and a customer VLAN, or the VLAN is an SVLAN.

With reference to the first possible implementation manner of the second aspect, in a second possible implementation manner, when the VLAN includes the SVLAN and the customer VLAN, the processing unit further is further configured to:
obtain, when the processing unit obtains no corresponding port identifier from the correspondence by using the obtained VLAN and the second port group, at least one corresponding port identifier from the correspondence by using the SVLAN in the obtained VLAN and the second port group.

With reference to any one of the second aspect, or the foregoing possible implementation manners of the second aspect, in a third possible implementation manner, the apparatus further includes:
an updating unit, configured to update the correspondence according to the VLAN, a port identifier corresponding to the port that receives the packet, and the first port group after the receiving unit identifies the port group to which the port that receives the packet belongs as the first port group and the obtaining unit obtains the VLAN from the packet.

With reference to the third possible implementation manner of the second aspect, in a fourth possible implementation manner, the updating unit is specifically configured to:
determine whether the correspondence includes a correspondence between the VLAN and the first port group; and
if the correspondence includes the correspondence between the VLAN and the first port group, update, based on the port identifier corresponding to the port that receives the packet, a port identifier included in the correspondence between the VLAN and the first port group; or if the correspondence does not include the correspondence between the VLAN and the first port group, create a new correspondence and add the new correspondence to the correspondence, where the new correspondence includes the VLAN, the first port group, and the port identifier corresponding to the port that receives the packet.

According to a third aspect, an access device is provided, where ports on the access device are grouped into a first port group and a second port group, a memory of the access device stores a correspondence among a virtual local area network VLAN, a port identifier, and a port group to which a port identified by the port identifier belongs, and the access device includes:
a transceiver, configured to: receive a packet, and when a processor obtains a port identifier, forward the packet through a port identified by the obtained port identifier; and
the processor, configured to: identify a port group to which a port that receives the packet belongs as the first port group, obtain a VLAN from the packet, and obtain the corresponding port identifier from the correspondence by using the obtained VLAN and the second port group.

With reference to the third aspect, in a first possible implementation manner, the VLAN includes a service virtual local area network SVLAN and a customer VLAN, or the VLAN is an SVLAN.

With reference to the first possible implementation manner of the third aspect, in a second possible implementation manner, when the VLAN includes the SVLAN and the customer VLAN, the processor further is further configured to:
obtain, when the access device obtains no corresponding port identifier from the correspondence by using the obtained VLAN and the second port group, at least one corresponding port identifier from the correspondence by using the SVLAN in the obtained VLAN and the second port group.

With reference to any one of the third aspect, or the foregoing possible implementation manner of the third aspect, in a third possible implementation manner, the processor is further configured to:
update the correspondence according to the VLAN, a port identifier corresponding to the port that receives the packet, and the first port group after identifying the port group to which the port that receives the packet belongs as the first port group and obtaining the VLAN from the packet.

With reference to the third possible implementation manner of the third aspect, in a fourth possible implementation manner, when the processor updates the correspondence according to the VLAN, the port identifier corresponding to the port that receives the packet, and the first port group, the processor is specifically configured to:
determine whether the correspondence includes a correspondence between the VLAN and the first port group; and
if the correspondence includes the correspondence between the VLAN and the first port group, update, based on the port identifier corresponding to the port that receives the packet, a port identifier included in the correspondence between the VLAN and the first port group; or if the correspondence does not include the correspondence between the VLAN and the first port group, create a new correspondence and add the new correspondence to the correspondence, where the new correspondence includes the VLAN, the first port group, and the port identifier corresponding to the port that receives the packet.

In the embodiments of the present invention, first, all ports on an access device are grouped into two port groups, and the access device stores a correspondence among a VLAN, a port identifier, and a port group to which a port identified by the port identifier belongs. The access device receives a packet, identifies a port group to which a port that receives the packet belongs as a first port group, and obtains a VLAN from the packet. The access device obtains a corresponding port identifier from the correspondence by using the obtained VLAN and a second port group, forwards the packet through a port identified by the obtained port identifier, and updates the correspondence according to the obtained VLAN, the first port group, and a port identifier corresponding to the port that receives the packet. The ports are grouped into different port groups. When a packet is forwarded after being received, a forwarding table may be quickly queried according to an SVLAN identifier, a CVLAN identifier, and the port groups, to determine an egress port identifier. Therefore, forwarding efficiency of a data forwarding device is improved, and a prior-art problem that S+C service data cannot be forwarded because forwarding tables corresponding to an IVL address learning manner and an SVL address learning manner are not applicable to an S+C service is effectively resolved.

### BRIEF DESCRIPTION OF DRAWINGS

FIG. 1 is a schematic diagram of an Ethernet frame with an IEEE 802.1Q tag in the prior art;
FIG. 2 is a schematic diagram of a switch engine of a switch supporting a VLAN in the prior art;
FIG. 3 is forwarding tables of two address learning manners of a switch supporting a VLAN in the prior art;
FIG. 4 is a schematic diagram of an Ethernet frame forwarding procedure in the prior art;
FIG. 5 is a schematic diagram of an Ethernet frame encapsulated according to QinQ in the prior art;
FIG. 6 is a flowchart of a data forwarding method according to an embodiment of the present invention;
FIG. 7 is a schematic diagram of an Ethernet frame forwarding procedure according to an embodiment of the present invention;
FIG. 8 is a structural diagram of a data forwarding apparatus according to an embodiment of the present invention; and
FIG. 9 is a schematic structural diagram of an access device according to an embodiment of the present invention.

### DESCRIPTION OF EMBODIMENTS

According to the technical solution of the present invention, ports on an access device are grouped into two port groups in advance, and a correspondence among a VLAN, a port identifier, and a port group to which a port identified by the port identifier belongs is stored. When a packet is received, a port group to which a port that receives the packet belongs is identified as a first port group, and a VLAN is obtained from the packet. The access device obtains a corresponding port identifier from the correspondence by using the obtained VLAN and a second port group, and forwards the packet through a port identified by the obtained port identifier. Therefore, a prior-art problem that S+C service data cannot be forwarded because forwarding tables corresponding to an IVL address learning manner and an SVL address learning manner are not applicable to an S+C service can be effectively resolved.

Embodiments of the present invention provide a data forwarding method applicable to an access device whose port is used for data forwarding, such as a switch that is used for processing an S+C service. The following describes implementation manners of the present invention in detail with reference to the accompanying drawings.

Referring to FIG. 6, an embodiment of the present invention provides a data forwarding method. First, ports on an access device are grouped into two port groups: a first port group and a second port group. The access device stores a correspondence among a VLAN, a port identifier, and a port group to which a port identified by the port identifier belongs. A specific processing procedure of the method includes the following steps.

Step 601: After receiving a packet, the access device identifies a port group to which a port that receives the packet belongs as the first port group.

In this embodiment, the access device groups all ports into different port groups according to a preset rule, and each port group includes at least one port. There may be multiple preset rules. For example, specified ports are grouped into a port group, and remaining ports are grouped into another port group; or ports in a specified identifier interval are grouped into a port group; or ports are grouped according to a characteristic such as a port location of the access device; or ports may be grouped into different port groups according to a port quantity, a device function, a special service, and the like.

In this embodiment, all the ports are grouped into two port groups. If a packet is received through a port in one port group, the packet needs to be forwarded through a port in the other port group. For example, for the access device, the ports may be grouped into a network-to-network interface (NNI) group and a user-to-network interface (UNI) group. Ports in different port groups are connected to different devices. A port in the NNI group is connected to a network-side network cable, and a port in the UNI group is connected to a user device network cable.

The ports on the access device are grouped into two port groups, and the access device may identify the port that receives the packet. Therefore, the access device may identify, according to the port that receives the packet, the port group to which the port that receives the packet belongs, and uses the port group as the first port group.

For example, a port 1 is configured as and grouped into the NNI group, and a port 2 and a port 3 are grouped into the UNI group, that is, NNI=[PORT 1], and UNI=[PORT 2, PORT 3]. If the port that receives the packet is the port 1, it may be determined, according to the foregoing port group information, that the port group to which the port, that is, the port 1 that receives the packet belongs is the NNI group, and the NNI group is denoted as the first port group.

Step 602: The access device obtains a VLAN from the packet.

Specifically, the VLAN includes an SVLAN and a customer VLAN, or
the VLAN is an SVLAN, that is, a customer VLAN identifier is empty.

Data of a packet in an S+C service is transmitted by using an Ethernet frame encapsulated by using a double-layer VLAN QinQ technology. Referring to FIG. 5, each Ethernet frame includes an outer-layer tag and an inner-layer tag. A VLAN ID in a tag header of the outer-layer tag is an SVLAN, and a VLAN ID in a tag header of the inner-layer tag is a customer VLAN. Therefore, after the Ethernet frame encapsulated by using the double-layer VLAN QinQ technology is received, the SLVAN carried in the Ethernet fame may be determined, or the SVLAN and the customer VLAN that are carried in the Ethernet frame may be determined.

Step 603: The access device obtains, by using the obtained VLAN and the second port group, a corresponding port identifier from the correspondence stored in the access device.

The access device stores the correspondence among a VLAN, a port identifier, and a port group to which a port identified by the port identifier belongs. When the VLAN includes the SVLAN and the customer VLAN, the correspondence is a correspondence among the SVLAN, the customer VLAN, the port identifier, and the port group to which the port identified by the port identifier belongs. When the VLAN is the SVLAN, the correspondence is a correspondence among the SVLAN, the port identifier, and the port group to which the port identified by the port identifier belongs.

According to the obtained VLAN and the second port group, a correspondence including the VLAN, the second port group, and a port identifier may be found in the correspondence stored in the access device, and the port identifier in the correspondence including the VLAN, the second port group, and the port identifier may be obtained.

In this embodiment, the ports are grouped into two port groups: the NNI group and the UNI group, and ports in different port groups are connected to different devices. Data sent from a network side flows to user equipment, and data sent from the user equipment flows to the network side. Therefore, it may be determined that if a port (source port) that receives a packet belongs to a first port group NNI, an egress port belongs to a second port group UNI. Similarly, if a port that receives a packet belongs to a first port group UNI, an egress port belongs to a second port group NNI.

Specifically, when the VLAN includes the SVLAN and the customer VLAN, because the received Ethernet frame carries the SVLAN and the customer VLAN, and the access device groups all the ports into two different port groups, a combination of the SVLAN and the customer VLAN may be corresponding to different ports in different port groups. However, the combination of the SVLAN and the customer VLAN can be corresponding to only a unique port in one port group.

When the VLAN includes the SLVAN and the customer VLAN, for the correspondence stored in the access device, refer to Table 3. Any entry in the correspondence (forwarding table) includes at least an SLVAN, a customer VLAN, a port group to which a port identified by a port identifier belongs, and the port identifier. Same combinations of the SVLAN and the customer VLAN may be corresponding to different port identifiers in different port groups. However, a combination of the SVLAN and the customer VLAN can be corresponding to only a unique port identifier in one port group.

**Table 3 Forwarding table corresponding to an S+C service**

| **SVLAN** | **Customer VLAN** | **Port group** | **Port identifier** |
|---|---|---|---|
| SVLAN 2 | CVLAN 3 | NNI | PORT 1 |
| SVLAN 2 | CVLAN 3 | UNI | PORT 2 |
| SVLAN 2 | CVLAN 5 | NNI | PORT 1 |
| SVLAN 2 | CVLAN 5 | UNI | PORT 2 |

Specifically, when the VLAN includes the SVLAN and the customer VLAN, that the access device obtains, by using the obtained VLAN and the second port group, a corresponding port identifier from the correspondence stored in the access device includes:
performing screening in the forwarding table according to the SVLAN, the customer VLAN, and the second port group to obtain a corresponding entry, and using, as a port identifier of an egress port for the packet, a port identifier that is set in the entry.

The forwarding table in Table 3 is still used as an example. If an SVLAN identifier of the received packet is SLVAN 2, a customer VLAN identifier is CVLAN 3, and the port group to which the port that receives the packet belongs is the NNI group, first, if the second port group, that is, a port group to which an egress port belongs is the UNI group, and then, screening is performed in the forwarding table to obtain a corresponding entry in which an SLVAN identifier is the SLVAN 2, a CVLAN identifier is the CVLAN 3, and a port group is the UNI group. It may be determined that the entry is the second entry in Table 3. Therefore, a port identifier (that is, the port identifier), that is, PORT 2 that is set in the entry is used as the port identifier of the egress port for the packet.

When the VLAN includes the SVLAN and the customer VLAN, the data forwarding method provided in this embodiment of the present invention further includes:
when the access device obtains no corresponding port identifier from the correspondence by using the obtained VLAN and the second port group, obtaining, by the access device by using the SVLAN in the obtained VLAN and the second port group, at least one corresponding port identifier from the correspondence stored in the access device.

The forwarding table in Table 3 is still used as an example. If an SVLAN identifier of the received packet is SLVAN 2, a customer VLAN identifier is CVLAN 4, and a port group to which a source port belongs is the NNI group, first, if a port group of an egress port is the UNI group, and then, screening is performed in the forwarding table to obtain a corresponding entry in which an SVLAN identifier is the SVLAN 2, a CVLAN identifier is the CVLAN 4, and a port group is the UNI group. In Table 3, the corresponding entry cannot be obtained by means of screening. Therefore, screening is performed in the forwarding table to obtain a corresponding entry in which an SVLAN identifier is the SVLAN 2 and a port group is the UNI group. It may be determined that corresponding entries are the second entry and the fourth entry in Table 3, and a port identifier, that is, PORT 2 that is set in the two entries is used as the port identifier of the egress port for the packet.

In a practical application scenario, at least one entry may be found in the forwarding table according to a specified SVLAN identifier and a specified port group. Therefore, the at least one entry is corresponding to at least one port identifier of an egress port.

In this embodiment of the present invention, ports are grouped into different port groups. When a packet is forwarded after being received, a forwarding table may be quickly queried according to an SVLAN and a customer VLAN that are in the packet and the port groups, to determine an egress port identifier. Therefore, forwarding efficiency of an access device is improved.

Step 604: The access device forwards the packet through a port identified by the obtained port identifier.

The packet is forwarded through the egress port corresponding to the port identifier of the egress port in two manners.

In a first manner, when the corresponding entry is obtained after screening is performed in the forwarding table according to the SVLAN, the CVLAN, and the second port group, there is one such entry. Therefore, a port identifier of an egress port may be directly determined by using the entry and the packet may be forwarded through the egress port corresponding to the port identifier of the egress port.

In a second manner, when the corresponding entry is not obtained after screening is performed in the forwarding table according to the SVLAN, the CVLAN, and the second port group, screening is performed in the forwarding table according to the SVLAN identifier and the second port group to obtain a corresponding entry, and there is at least one such entry. Therefore, there is also at least one corresponding port identifier of an egress port, all port identifiers that are set in the entry are used as port identifiers of the egress port for the packet, and the packet is separately broadcast and forwarded through the egress port corresponding to at least one port identifier of the egress port.

After step 601 and step 602, that is, after the access device identifies the port group to which the port that receives the packet belongs as the first port group and obtains the VLAN from the packet, the method further includes:
updating, by the access device according to the VLAN identifier, the port identifier corresponding to the port that receives the packet, and the first port group, the correspondence stored in the access device.

The forwarding table may be updated at any time after step 602. The forwarding table may be updated before step 603 and step 604, or after step 603 and step 604, or at the same time with step 603 or step 604.

Specifically, the updating the correspondence according to the VLAN, the port identifier corresponding to the port that receives the packet, and the first port group includes:
determining whether the correspondence includes a correspondence between the VLAN and the first port group; and
if the correspondence includes the correspondence between the VLAN and the first port group, updating, based on the port identifier corresponding to the port that receives the packet, a port identifier included in the correspondence between the VLAN and the first port group; or if the correspondence does not include the correspondence between the VLAN and the first port group, creating a new correspondence and adding the new correspondence to the correspondence, where the new correspondence includes the VLAN, the first port group, and the port identifier corresponding to the port that receives the packet.

For example, the forwarding table is Table 3, the SVLAN identifier of the received packet is SVLAN 2, the customer VLAN identifier is CVLAN 3, a port identifier of a source port is PORT 1, and a port group to which the source port belongs is the NNI group. An entry, that is, the first entry, in which an SVLAN identifier is the SVLAN 2, a customer VLAN identifier is the CVLAN 3, and a port group to which the source port belongs is the NNI group may be found in the forwarding table. The port identifier in the entry is updated according to the port identifier PORT 1 of the source port regardless of whether a port identifier corresponding to the entry is consistent with the port identifier of the source port.

For another example, the forwarding table is Table 3, the SVLAN identifier of the received packet is SVLAN 2, the customer VLAN identifier is CVLAN 4, a port identifier of a source port is PORT 1, and a port group to which the source port belongs is the NNI group. If no entry in which an SVLAN identifier is the SVLAN 2, a CVLAN identifier is the CVLAN 4, and a port group to which the source port belongs is the NNI group can be found in the forwarding table, a new entry is formed by using the SVLAN 2, the CVLAN 4, the PORT 1, and the NNI group, and the new correspondence is saved to the forwarding table.

The forwarding table is updated in real time in the two manners, so that it may be ensured that a latest correspondence between a port and an SVLAN+CVLAN is stored in the forwarding table, and it may also be ensured that after receiving data through a new source port a in a same SVLAN+CVLAN, the access device can still forward a packet through the new port a after the packet with the same SVLAN+CVLAN is received through an egress port b corresponding to the source port a as a source port. Therefore, a problem that because a correspondence in the forwarding table is inconsistent with the latest correspondence between a port and an SVLAN+CVLAN, the packet cannot be accurately sent, forwarding efficiency of a data forwarding device is reduced, and user experience is reduced is avoided. When no new correspondence between a source port and an SVLAN+CVLAN is saved to the forwarding table, the correspondence between a source port and an SVLAN+CVLAN may be added to the forwarding table in a self-learning manner, so that a data discarding probability is reduced, forwarding efficiency of the data forwarding device is ensured, and user experience is improved.

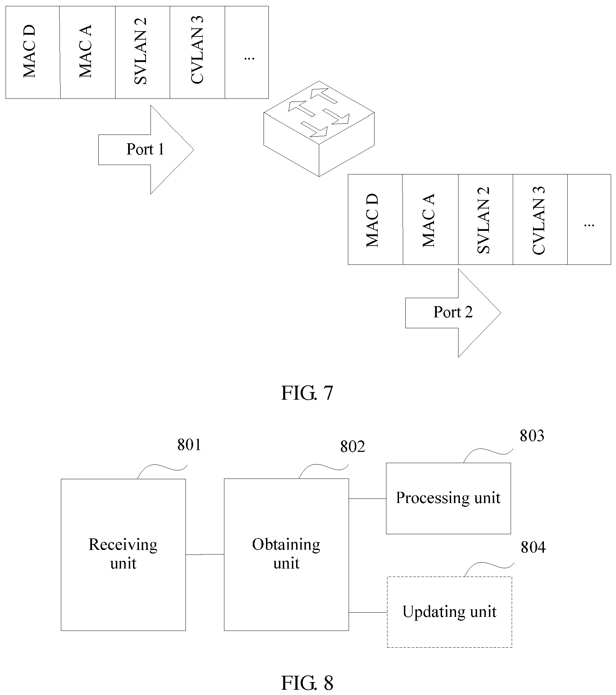

Referring to FIG. 7, for example, a switch groups ports: a port 1, a port 2, and a port 3 into different port groups, groups the port 1 into a port group NNI, and groups the port 2 and the port 3 into a port group UNI. A forwarding table corresponding to the switch is shown in Table 3. After receiving a packet whose SVLAN identifier is SVLAN 2, and CVLAN identifier is CVLAN 2 from the port 1, the switch determines that a port group to which a source port, that is, the port 1 belongs is the NNI group. The forwarding table is searched according to the SVLAN 2, the CVLAN 3, and the NNI group of the packet for a corresponding entry, that is, the first entry. Then, a port identifier in the entry is updated according to the port 1. A port identifier cluster UNI of an egress port is determined according to the port group NNI of the source port, and the forwarding table is searched for an entry corresponding to the SVLAN 2, the CVLAN 3, and the UNI group, that is, the second entry. It is determined, according to the second entry, that the egress port is the port 2, and the received packet is forwarded through the port 2.

Based on the foregoing embodiments, referring to FIG. 8, an embodiment of the present invention further provides a data forwarding apparatus. Ports on the data forwarding apparatus are grouped into a first port group and a second port group. The data forwarding apparatus stores a correspondence among a VLAN, a port identifier, and a port group to which a port identified by the port identifier belongs. The apparatus includes: a receiving unit 801, an obtaining unit 802, and a processor 803.

The receiving unit 801 is configured to: receive a packet, and identify a port group to which a port that receives the packet belongs as the first port group.

The obtaining unit 802 is configured to obtain a VLAN from the packet.

The processing unit 803 is configured to: obtain a corresponding port identifier from the correspondence by using the obtained VLAN and the second port group, and forward the packet through a port identified by the obtained port identifier.

Optionally, the VLAN includes an SVLAN and a customer VLAN, or the VLAN is an SVLAN.

Optionally, when the VLAN includes the SVLAN and the customer VLAN, the processing unit 803 is further configured to:
obtain, when the processing unit 803 obtains no corresponding port identifier from the correspondence by using the obtained VLAN and the second port group, at least one corresponding port identifier from the correspondence by using the SVLAN in the obtained VLAN and the second port group.

Optionally, the data forwarding apparatus further includes:
an updating unit 804, configured to update the correspondence according to the VLAN, a port identifier corresponding to the port that receives the packet, and the first port group after the receiving unit 801 identifies the port group to which the port that receives the packet belongs as the first port group and the obtaining unit 802 obtains the VLAN from the packet.

Optionally, the updating unit 804 is specifically configured to:
determine whether the correspondence includes a correspondence between the VLAN and the first port group; and
if the correspondence includes the correspondence between the VLAN and the first port group, update, based on the port identifier corresponding to the port that receives the packet, a port identifier included in the correspondence between the VLAN and the first port group; or if the correspondence does not include the correspondence between the VLAN and the first port group, create a new correspondence and add the new correspondence to the correspondence, where the new correspondence includes the VLAN, the first port group, and the port identifier corresponding to the port that receives the packet.

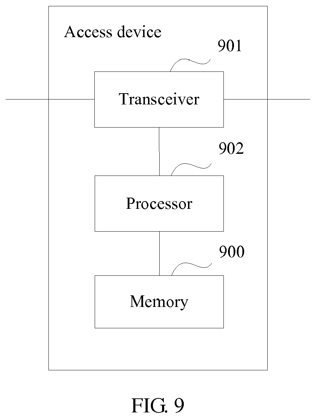

Based on the foregoing embodiments, referring to FIG. 9, an embodiment of the present invention further provides an access device. Ports on the access device are grouped into a first port group and a second port group. A memory 900 of the access device stores a correspondence among a VLAN, a port identifier, and a port group to which a port identified by the port identifier belongs. The apparatus includes a transceiver 901 and a processor 902.

The transceiver 901 is configured to: receive a packet, and forward the packet through a port identified by the obtained port identifier when the processor 902 obtains a port identifier.

The processor 902 is configured to: identify a port group to which a port that receives the packet belongs as the first port group, obtain a VLAN from the packet, and obtain the corresponding port identifier from the correspondence by using the obtained VLAN and the second port group.

Optionally, the VLAN includes a service virtual local area network SVLAN and a customer VLAN, or the VLAN is an SVLAN.

Optionally, when the VLAN includes the SVLAN and the customer VLAN, the processor 902 is further configured to:
obtain, when the access device obtains no corresponding port identifier from the correspondence by using the obtained VLAN and the second port group, at least one corresponding port identifier from the correspondence by using the SVLAN in the obtained VLAN and the second port group.

Optionally, the processor 902 is further configured to:
update the correspondence according to the VLAN, a port identifier corresponding to the port that receives the packet, and the first port group after identifying the port group to which the port that receives the packet belongs as the first port group and obtaining the VLAN from the packet.

Optionally, when updating the correspondence according to the VLAN, the port identifier corresponding to the port that receives the packet, and the first port group, the processor 902 is specifically configured to:
determine whether the correspondence includes a correspondence between the VLAN and the first port group; and
if the correspondence includes the correspondence between the VLAN and the first port group, update, based on the port identifier corresponding to the port that receives the packet, a port identifier included in the correspondence between the VLAN and the first port group; or if the correspondence does not include the correspondence between the VLAN and the first port group, create a new correspondence and add the new correspondence to the correspondence, where the new correspondence includes the VLAN, the first port group, and the port identifier corresponding to the port that receives the packet.

In conclusion, the embodiments of the present invention provide the data forwarding method and apparatus, and the access device. In this method, first, all ports on an access device are grouped into two port groups, and the access device stores a correspondence among a virtual local area network VLAN, a port identifier, and a port group to which a port identified by the port identifier belongs. The access device receives a packet, identifies a port group to which a port that receives the packet belongs as a first port group, and obtains a VLAN from the packet. The access device obtains a corresponding port identifier from the correspondence by using the obtained VLAN and a second port group, forwards the packet through a port identified by the obtained port identifier, and updates the correspondence according to the obtained VLAN, the first port group, and a port identifier corresponding to the port that receives the packet. The ports are divided into different port groups. When a packet is forwarded after being received, a forwarding table may be quickly queried according to an SVLAN identifier, a CVLAN identifier, and the port groups, to determine an egress port identifier, so that forwarding efficiency of a port data forwarding device is improved, and a prior-art problem that S+C service data cannot be forwarded because forwarding tables corresponding to an IVL address learning manner and an SVL address learning manner are not applicable to an S+C service is resolved. The forwarding table is updated in real time according to the SVLAN identifier, the CLVAN identifier, a port identifier corresponding to a port that receives the packet, and a port identifier corresponding to the port that receives the packet. A correspondence among a source port, an SVLAN, and a CVLAN is updated or added to the forwarding table in a self-learning manner, so that a data discarding probability is reduced, forwarding efficiency of a dara forwarding device is ensured, and user experience is improved.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A data forwarding method, wherein ports on an access device are grouped into a first port group and a second port group, the access device stores a correspondence among a virtual local area network VLAN, a port identifier, and a port group to which a port identified by the port identifier belongs, and the method comprises:
receiving, by the access device, a packet, and identifying a port group to which a port that receives the packet belongs as the first port group;
obtaining, by the access device, a VLAN from the packet;
obtaining, by the access device, a corresponding port identifier from the correspondence by using the obtained VLAN and the second port group; and
forwarding, by the access device, the packet through a port identified by the obtained port identifier.

2. The method according to claim 1, wherein the VLAN comprises a service virtual local area network SVLAN and a customer VLAN, or the VLAN is an SVLAN.

3. The method according to claim 2, wherein when the VLAN comprises the SVLAN and the customer VLAN, the method further comprises:
obtaining, when the access device obtains no corresponding port identifier from the correspondence by using the obtained VLAN and the second port group, at least one corresponding port identifier from the correspondence by using the SVLAN in the obtained VLAN and the second port group.

4. The method according to any one of claims 1 to 3, wherein after the identifying, by the access device, a port group to which a port that receives the packet belongs as the first port group and the obtaining a VLAN from the packet, the method further comprises:
updating, by the access device, the correspondence according to the VLAN, a port identifier corresponding to the port that receives the packet, and the first port group.

5. The method according to claim 4, wherein the updating the correspondence according to the VLAN, a port identifier corresponding to the port that receives the packet, and the first port group comprises:
determining whether the correspondence comprises a correspondence between the VLAN and the first port group; and
if the correspondence comprises the correspondence between the VLAN and the first port group, updating, based on the port identifier corresponding to the port that receives the packet, a port identifier comprised in the correspondence between the VLAN and the first port group; or if the correspondence does not comprise the correspondence between the VLAN and the first port group, creating a new correspondence and adding the new correspondence to the correspondence, wherein the new correspondence comprises the VLAN, the first port group, and the port identifier corresponding to the port that receives the packet.

6. A data forwarding apparatus, wherein ports on the data forwarding apparatus are grouped into a first port group and a second port group, the data forwarding apparatus stores a correspondence among a virtual local area network VLAN, a port identifier, and a port group to which a port identified by the port identifier belongs, and the apparatus comprises:
a receiving unit, configured to: receive a packet, and identify a port group to which a port that receives the packet belongs as the first port group;
an obtaining unit, configured to obtain a VLAN from the packet; and
a processing unit, configured to: obtain a corresponding port identifier from the correspondence by using the obtained VLAN and the second port group, and forward the packet through a port identified by the obtained port identifier.

7. The apparatus according to claim 6, wherein the VLAN comprises a service virtual local area network SVLAN and a customer VLAN, or the VLAN is an SVLAN.

8. The apparatus according to claim 7, wherein when the VLAN comprises the SVLAN and the customer VLAN, the processing unit is further configured to:
obtain, when the processing unit obtains no corresponding port identifier from the correspondence by using the obtained VLAN and the second port group, at least one corresponding port identifier from the correspondence by using the SVLAN in the obtained VLAN and the second port group.

9. The apparatus according to any one of claims 6 to 8, wherein the apparatus further comprises:
an updating unit, configured to update the correspondence according to the VLAN, a port identifier corresponding to the port that receives the packet, and the first port group after the receiving unit identifies the port group to which the port that receives the packet belongs as the first port group and the obtaining unit obtains the VLAN from the packet.

10. The apparatus according to claim 9, wherein the updating unit is specifically configured to:
determine whether the correspondence comprises a correspondence between the VLAN and the first port group; and
if the correspondence comprises the correspondence between the VLAN and the first port group, update, based on the port identifier corresponding to the port that receives the packet, a port identifier comprised in the correspondence between the VLAN and the first port group; or if the correspondence does not comprise the correspondence between the VLAN and the first port group, create a new correspondence and add the new correspondence to the correspondence, wherein the new correspondence comprises the VLAN, the first port group, and the port identifier corresponding to the port that receives the packet.

11. An access device, wherein ports on the access device are grouped into a first port group and a second port group, a memory of the access device stores a correspondence among a virtual local area network VLAN, a port identifier, and a port group to which a port identified by the port identifier belongs, and the access device comprises:
a transceiver, configured to: receive a packet, and when a processor obtains a port identifier, forward the packet through a port identified by the obtained port identifier; and
the processor, configured to: identify a port group to which a port that receives the packet belongs as the first port group, obtain a VLAN from the packet, and obtain the corresponding port identifier from the correspondence by using the obtained VLAN and the second port group.

12. The access device according to claim 11, wherein the VLAN comprises a service virtual local area network SVLAN and a customer VLAN, or the VLAN is an SVLAN.

13. The access device according to claim 12, wherein when the VLAN comprises the SVLAN and the customer VLAN, the processor is further configured to:
obtain, when the access device obtains no corresponding port identifier from the correspondence by using the obtained VLAN and the second port group, at least one corresponding port identifier from the correspondence by using the SVLAN in the obtained VLAN and the second port group.

14. The access device according to any one of claims 11 to 13, wherein the processor is further configured to:
update the correspondence according to the VLAN, a port identifier corresponding to the port that receives the packet, and the first port group after identifying the port group to which the port that receives the packet belongs as the first port group and obtaining the VLAN from the packet.

15. The access device according to claim 14, wherein when the processor updates the correspondence according to the VLAN, the port identifier corresponding to the port that receives the packet, and the first port group, the processor is specifically configured to:
determine whether the correspondence comprises a correspondence between the VLAN and the first port group; and
if the correspondence comprises the correspondence between the VLAN and the first port group, update, based on the port identifier corresponding to the port that receives the packet, a port identifier comprised in the correspondence between the VLAN and the first port group; or if the correspondence does not comprise the correspondence between the VLAN and the first port group, create a new correspondence and add the new correspondence to the correspondence, wherein the new correspondence comprises the VLAN, the first port group, and the port identifier corresponding to the port that receives the packet.
